# EUROPÄISCHE PATENTANMELDUNG

(11) **EP 1 248 161 A2**
(43) Veröffentlichungstag der Anmeldung: **09.10.2002**
(21) Anmeldenummer: 02005332.8
(22) Anmeldetag: 14.03.2002
(51) Int. Cl.: G03G 15/20

(54) **Walzenkonstruktion für den Betrieb unter erhöhten Temperaturen**

(30) Priorität: 06.04.2001 US 827410
(71) Anmelder: NexPress Solutions LLC, Rochester, NY 14653-7103 (US)
(72) Erfinder: Bleil, Rainer, 73116 Wäschebeuren (DE); Chen, Jiann-Hsing, Fairport, New York 14450 (US); Kass, Allen, Pittsford, NY 14534 (US); Miller, Terence M., Rochester, NY 14626 (US)
(74) Vertreter: Franzen, Peter

(57) **Zusammenfassung**

Gegenstand der Erfindung ist eine Walze (10) zur Verwendung in einer Fixiervorrichtung für ein Reproduktionsgerät, die für den Betrieb unter erhöhten Temperaturen im Bereich bis ca. 400°C ausgelegt ist. Die Walze (10) umfasst ein allgemein langgestrecktes, im Wesentlichen zylindrisches Rohr (12). Zur Abdichtung der Enden des zylindrischen Rohres (12) sind Abschlusszapfen (14) vorgesehen. Jeder Abschlusszapfen (14) ist seinerseits mit einem Ende des zylindrischen Rohres (12) derart verbunden, dass nach Bildung einer Schweißverbindung zwischen dem zylindrischen Rohr (12) und dem Abschlusszapfen (14) der Abschlusszapfen (14) eine Pressverbindung eingeht, was verhindert, dass sich das zylindrische Rohr (12) von dem Abschlusszapfen (14) aufgrund einer bei höheren Betriebstemperaturen auftretenden Materialdauerdehnung trennt.

## Beschreibung

Die vorliegende Erfindung betrifft im Allgemeinen Walzen, beispielsweise zur Verwendung in Fixiervorrichtungen von Reproduktionsgeräten, und insbesondere eine Konstruktion von Fixier-, Druck- oder Heizwalzen, die sich bei erhöhten Temperaturen betreiben lassen.

In Reproduktionsgeräten, wie Kopierern/Vervielfältigern und Druckern, werden häufig Fixierwalzen oder Heizwalzen verwendet, die zwei Abschlusskappen umfassen, die aus Edelstahl sein können, wobei die Abschlusskappen mit einem thermisch leitenden Rohr verbunden sind, etwa aus Aluminium oder Kupfer oder Legierungen dieser beiden Materialien. Es gibt viele bekannte Verfahren, um die Abschlusskappen mit dem Rohr zu verbinden, z.B. durch mechanisches Verschrauben, Presspassung, Sicherungsringe, Verschweißen usw. Wenn die Abschlusskappen und das Rohr aus dem gleichen Material bestehen, lassen sich Umformtechniken, wie Gießen oder Schmieden verwenden, soweit keine Verbindungstechniken erforderlich sind.

Aufgrund der niedrigen Kosten werden Abschlusskappen mit dem Rohr häufig durch Reibschweißverfahren verbunden. Das Reibschweißen wird entweder mit oder ohne Kraftschluss durchgeführt. Wenn die Abschlusskappe oder der Abschlusszapfen und das Rohr Materialien umfassen, die schweißbar sind, dann kann ein Pressstumpfschweißverfahren verwendet werden (siehe EP 0 395 385). Wenn die Abschlusskappe und das Rohr Materialien umfassen, die nicht ohne weiteres schweißbar sind, dann kann eine Schwalbenschwanzverbindung verwendet werden (siehe US 5,094,613).

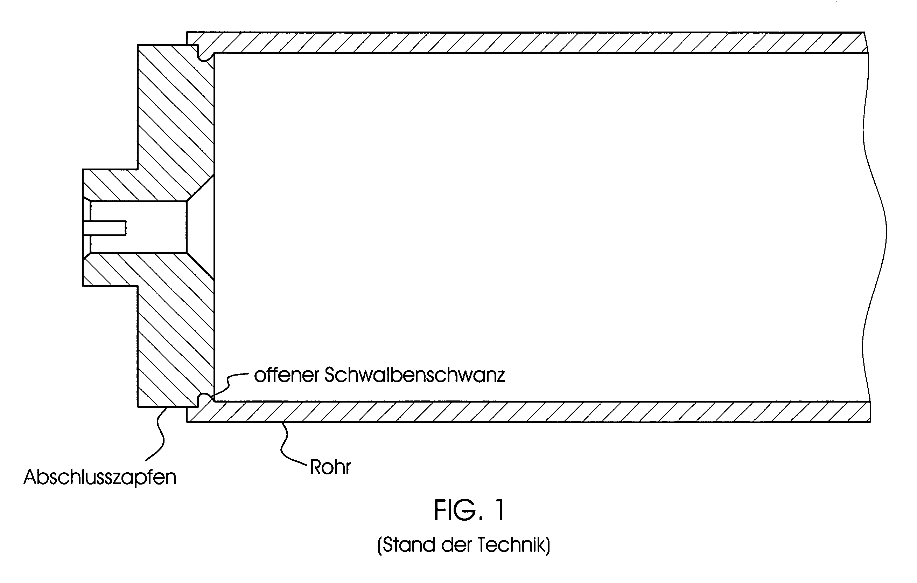

Für die Verwendung der Schwalbenschwanz-Schweißkonstruktion nach dem Stand der Technik zur Verbindung von Abschlusskappen mit Rohren (wie in Fig. 1 gezeigt), spricht vor allem, dass unter den bisherigen Betriebsbedingungen eine hervorragende Verbindung entstand. Dies ist offenbar darauf zurückzuführen, dass das Rohrmaterial (typischerweise Aluminium) während des Reibschweißens bei einer Schmiedetemperatur von ca. 482°C bis 593°C (900°F bis 1100°F) in den Schwalbenschwanz eingeschmiedet wird. Dadurch entsteht ein wirksamer Schrumpfsitz. Die Schwalbenschwanzkonfiguration verhindert, dass sich die Abschlusskappe oder der Abschlusszapfen während des Betriebs bei den bisher üblichen Betriebstemperaturen herauslöst. Je nach gewählten Materialien und Reibschweißparametern kann es zwischen den beiden Materialien an der Schweißverbindung zu einem Verschweißen der Oberflächen kommen, was die Verbindung zusätzlich verbessert.

Unter starker Spannung ist jedoch festgestellt worden, dass sich die als offene Schwalbenschwanzkonstruktion hergestellte Verbindung lösen kann, wenn die Belastung den Streckpunkt der verwendeten Materialien überschreitet. Eine Hauptkomponente dieser Spannungen ist die Belastung, die auf die Walze in ihrer Länge einwirkt. Eine weitere Hauptkomponente dieser Spannung ist ein Ergebnis des Differentialkoeffizienten der Wärmeausdehnung der beiden Materialien von Raumtemperatur bis zur Fixierwalzenbetriebstemperatur. Je höher die Betriebstemperatur der Fixierwalze ist, umso höher sind die Spannungen, die an der Verbindung aufgrund der unterschiedlichen Materialausdehnung entstehen.

Bei den am häufigsten verwendeten Materialien für die Walzen der Fixiervorrichtung eines Reproduktionsgeräts handelt es sich um Aluminium für das Rohr und Edelstahl für den Abschlusszapfen. Bei der offenen Schwalbenschwanzkonstruktion dehnt sich das Aluminium bei Fixiertemperatur in einer Richtung aus, die vom Abschlusszapfen wegführt. Solange das Material nicht nachgibt oder ermüdet, hält die Schweißverbindung praktisch unbegrenzt. Für Fixierwalzenkerne, bei denen die Betriebstemperatur einen Maximalwert von 204°C (400°F) nicht überschreitet, funktioniert die offene Schwalbenschwanzkonstruktion hervorragend. Um eine zufriedenstellende und steuerbare Fixierung zu erreichen, können die Betriebstemperaturen der Fixiervorrichtung aber durchaus 204°C (400°F) überschreiten und ca. 400°C (750°F) erreichen. Bei derart hohen Betriebstemperaturen fängt das Aluminium in dem Rohr aufgrund seiner niedrigen Kriechgrenze zu Kriechen an. Die Presspassung wird dadurch verringert oder geht vollständig verloren, was zu einem Ausfall der Verbindung führt.

Angesichts der vorausgehenden Ausführungen betrifft die vorliegende Erfindung eine Fixierwalzenkonstruktion in einem Reproduktionsgerät (für den Betrieb bei Temperaturen zwischen 204°C und 400°C (400°F und 750°F)), wobei ein Rohr mit einem Abschlusszapfen in einer Weise verbunden ist, die im Wesentlichen die Trennung der Walze von dem Abschlusszapfen verhindert. Die Walze umfasst ein allgemein langgestrecktes, im Wesentlichen zylindrisches Rohr. Zur Abdichtung der Enden des zylindrischen Rohres sind Abschlusszapfen vorgesehen. Jeder Abschlusszapfen ist seinerseits mit einem Ende des zylindrischen Rohres derart verbunden, dass nach Bildung einer Schweißverbindung zwischen dem zylindrischen Rohr und dem Abschlusszapfen der Abschlusszapfen eine Pressverbindung eingeht, was verhindert, dass sich das zylindrische Rohr von dem Abschlusszapfen aufgrund einer bei höheren Betriebstemperaturen auftretenden Kriechen trennt.

Die Erfindung wird im folgenden anhand in der Zeichnung dargestellter Ausführungsbeispiele näher erläutert.

Es zeigen
- Fig. 1: eine Seitenansicht in Schnittdarstellung einer Walze mit einem Abschlusszapfen, der an einem Rohr mithilfe einer offenen Schwalbenschwanz-Schweißverbindung nach dem Stand der Technik befestigt ist;

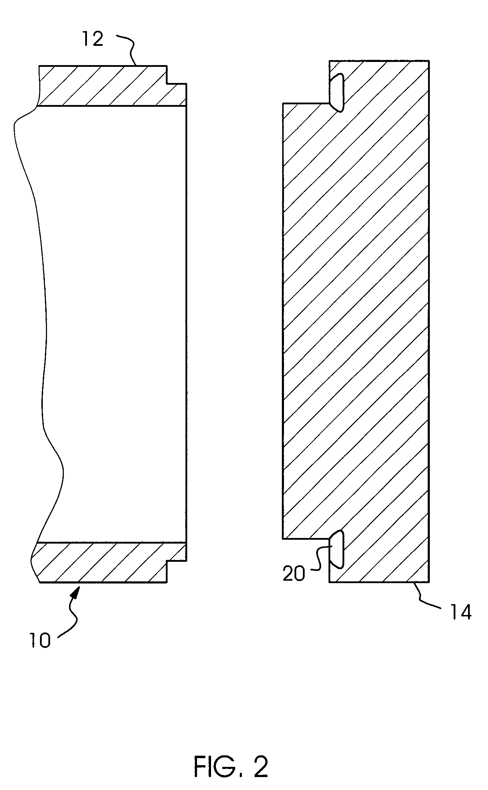

- Fig. 2: eine auseinandergezogene Seitenansicht in Schnittdarstellung eines Rohres und eines Abschlusszapfens für eine Walze, wobei der Abschlusszapfen einen parallel umschlossenen, doppelten Schwalbenschwanz zur Bildung einer verbesserten Schweißverbindung gemäß der vorliegenden Erfindung aufweist; und

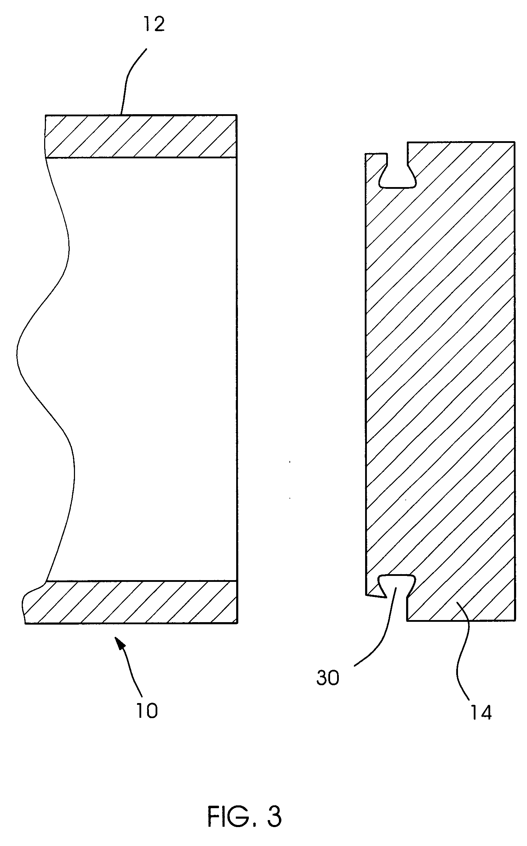

- Fig. 3: eine auseinandergezogene Seitenansicht in Schnittdarstellung eines Rohres und eines Abschlusszapfens für eine Walze, ähnlich wie in Fig. 2, wobei jedoch der Abschlusszapfen alternativ ausgebildet ist für einen senkrecht umschlossenen, doppelten Schwalbenschwanz zur Bildung einer verbesserten Schweißverbindung gemäß der vorliegenden Erfindung; und

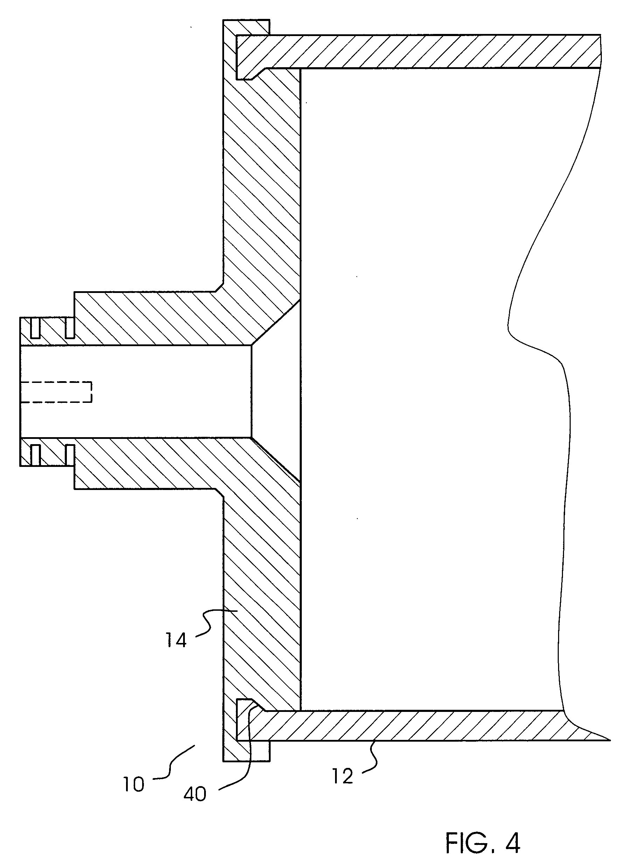

- Fig. 4: eine Seitenansicht in Schnittdarstellung eines Rohres und eines Abschlusszapfens für eine Walze, ähnlich wie in Fig. 2, wobei jedoch der Abschlusszapfen und das Rohr durch den umschlossenen, doppelten Schwalbenschwanz zur Bildung einer verbesserten Schweißverbindung gemäß der vorliegenden Erfindung verbunden sind.

Fig. 2 bis 4 der anliegenden Zeichnungen zeigen eine Walze 10. In dem bevorzugten Ausführungsbeispiel ist die Walze 10 allgemein als ein langgestrecktes, im Wesentlichen zylindrisches Rohr 12 ausgebildet, das mit Abschlusskappen oder Abschlusszapfen 14 versehen ist, um die jeweiligen Enden des Rohres abzudichten. Die Walze 10 wird typischerweise z.B. als eine Fixierwalze oder als eine Druckwalze für eine Fixiervorrichtung benutzt, um Markierungspartikelbilder auf Empfangselementen in einem elektrostatografischen Reproduktionsgerät zu fixieren, oder als Heizwalze für eine derartige Fixierwalze. Die Walze kann mit einer geeigneten Beschichtung versehen sein, beispielsweise mit einem geeigneten Fluorelastomer.

Wie bereits erwähnt, wird die Walze 10 möglicherweise unter verschärften, extremen Bedingungen betrieben, beispielsweise im Temperaturbereich von ca. 204°C bis 400°C (400°F bis 750°F). Daher bestehen das Rohr 12 und die Abschlusszapfen 14 aus Materialien, die für die Funktionen am besten geeignet sind, die diese Elemente wahrnehmen sollen. Das Rohr 12 muss gute Wärmeleiteigenschaften aufweisen, damit die Wärme schnell an die Oberfläche des Rohres gelangt, um den Fixiervorgang durchzuführen (d.h. das Schmelzen der Markierungspartikel, damit diese in die Oberfläche eines Empfangselements eindringen können, oder das Erwärmen der Außenfläche einer Fixierwalze). Dagegen sind die Abschlusszapfen 14 aus einem wärmeisolierenden Material ausgebildet, um zu verhindern, dass Wärme an den Enden des Rohres austritt und die Tragwelle beschädigt oder andere zugehörige Elemente einer übermäßigen Wärmebelastung ausgesetzt werden. Die Abschlusszapfen müssen zudem eine entsprechende Festigkeit und Härte aufweisen, um Drehmomente übertragen und als Lagerfläche dienen zu können.

Wie zuvor besprochen, ist die Walze 10 typischerweise so aufgebaut, dass die Abschlusszapfen 14 mit dem Rohr 12 mithilfe der üblichen Reibschweißtechnik verschweißt werden. Unter den verschärften Einsatzbedingungen bei erhöhten Temperaturen fallen Reibschweißverbindungen nach dem Stand der Technik aus. Erfindungsgemäß ist die Reibschweißverbindung mithilfe eines umschlossenen Schwalbenschwanzes herstellbar. In Fig. 2 ist der umschlossene Schwalbenschwanz mit dem Bezugszeichen 20 versehen, in Fig. 3 ist der umschlossene Schwalbenschwanz mit dem Bezugszeichen 30 versehen, und in Fig. 4 ist der umschlossene Schwalbenschwanz mit dem Bezugszeichen 40 versehen. Die Reibschweißverbindung mit umschlossenem Schwalbenschwanz hat die Aufgabe, eine von dem Abschlusszapfen 14 weggerichtete Ausdehnung des Rohres 12 im Wesentlichen zu verhindern. Der umschlossene Schwalbenschwanz verhindert eine Lockerung der Presspassung durch Kriechen, indem die gesamte Verbindung bei erhöhten Temperaturen mit Druck beaufschlagt wird. Bislang unterlag die Verbindung Spannungen aufgrund der unterschiedlichen Wärmeausdehnungskoeffizienten der Materialien, was zu einer Trennung der Komponenten und einem Ausfall der Verbindung führte. Die Lebenserwartung von Walzen für Fixiervorrichtungen, die bei den zuvor genannten Temperaturen von ca. 204°C bis 400°C (400°F bis 750°F) betrieben werden, lässt sich somit wesentlich verlängern. Dies ist wichtig, da Fixierwalzen dieser Bauart üblicherweise einer Wiederverwendung zugeführt werden (d.h. Walzen erhalten bei Verschleiß der Originalbeschichtung eine entsprechende Oberflächenbeschichtung), um die Gesamtbetriebskosten des Reproduktionsgeräts niedrig zu halten.

In einem bevorzugten Ausführungsbeispiel besteht das Rohr 12 der Fixierwalze aus einem Material, das einen wesentlich anderen Wärmeausdehnungskoeffizienten besitzt als das Material, aus dem der Abschlusszapfen 14 besteht. Die allgemeine Betriebstemperatur des Fixierwalzenkerns liegt in diesem Beispiel im Bereich von ca. 204°C und 400°C (400°F bis 750°F). Insbesondere kann es sich bei dem Rohrmaterial um Aluminium handeln, das einen Wärmeausdehnungskoeffizienten von 23,4x10⁻⁶ /K hat, während das Zapfenmaterial aus Edelstahl des Typs 304 besteht (oder der Serie 200 oder 300), der einen Wärmeausdehnungskoeffizienten von 17,28x10⁻⁶ /K hat. Der Wärmeausdehnungskoeffizient des Rohrmaterials ist also wesentlich größer als der des Abschlusszapfens.

Die erfindungsgemäße Schweißverbindung umfasst einen umschlossenen Schwalbenschwanz. Der Schwalbenschwanz ist also derart ausgelegt, dass er das Aluminiumrohr 12 aufnimmt und es im Wesentlichen daran hindert, sich ausdehnungsbedingt von dem Abschlusszapfen 14 wegzubewegen und sich von diesem zu trennen. Fig. 2 und 3 sind auseinandergezogene Ansichten zur besseren Darstellung des umschlossenen Schwalbenschwanzes. Wie in Fig. 2 gezeigt, ist der umschlossene Schwalbenschwanz 20 ein doppelter Schwalbenschwanz, der parallel zur Längsachse des Abschlusszapfens 14 verläuft. Bei Ausbildung der Reibschweißverbindung läuft Material vom Ende des Rohres 12 in die doppelten Bereiche des Schwalbenschwanzes. Bei Betrieb der Walze 10 unter erhöhten Temperaturen (im Bereich von ca. 204°C bis 400°C (400°F bis 750°F)) verhindert der Abschnitt des Abschlusszapfens außerhalb des Schwalbenschwanzes im Wesentlichen, dass sich das Rohr von dem Abschlusszapfen trennt. Wie in Fig. 3 gezeigt, ist der umschlossene Schwalbenschwanz 30 ein doppelter Schwalbenschwanz, der senkrecht zur Längsachse des Abschlusszapfens verläuft. Auch hier läuft bei Ausbildung der Reibschweißverbindung Material vom Ende des Rohres 12 in die doppelten Bereiche des Schwalbenschwanzes. Bei Betrieb der Walze 10 unter erhöhten Temperaturen verhindert der Abschnitt des Abschlusszapfens außerhalb des Schwalbenschwanzes im Wesentlichen, dass sich das Rohr von dem Abschlusszapfen trennt. Daraus ist zu erkennen, dass der umschlossene Schwalbenschwanz eine Lockerung der Presspassung durch Kriechen verhindert, indem die gesamte Verbindung bei erhöhten Temperaturen mit Druck beaufschlagt wird.

Fig. 4 zeigt das Rohr 12 montiert und reibverschweißt mit dem Abschlusszapfen 14 durch einen einfachen, parallelen Schwalbenschwanz 40. Ähnlich wie in den vorausgehenden Beschreibungen läuft bei Ausbildung der Reibschweißverbindung Material vom Ende des Rohres 12 in den Bereich des Schwalbenschwanzes. Bei Betrieb der Walze 10 unter erhöhten Temperaturen verhindert der Abschnitt des Abschlusszapfens außerhalb des Schwalbenschwanzes im Wesentlichen, dass sich das Rohr von dem Abschlusszapfen trennt.

In einem alternativ bevorzugten Ausführungsbeispiel, bei der die Reibschweißverbindung erfindungsgemäß einen umschlossenen Schwalbenschwanz umfasst, können die für das Rohr 12 und für den Abschlusszapfen 14 ausgewählten Materialien verschieden sein, aber im Wesentlichen den gleichen Wärmeausdehnungskoeffizienten besitzen. Beispielsweise sind Kupfer oder Kupferlegierungen als Materialien für das Rohr 12 verwendbar und Edelstahl der Serie 200, 300 oder 400 (insbesondere Edelstahl des Typs 304) als Material für den Abschlusszapfen 14 verwendbar. Der Wärmeausdehnungskoeffizient dieser beiden Materialien ist ungefähr gleich (der Wärmeausdehnungskoeffizient von Kupfer beträgt 18x10⁻⁶ /K, der von Edelstahl Typ 304 beträgt 17,28x10⁻⁶ /K). Viele Kupferlegierungen (z.B. C122000) bilden unter Einwirkung von Temperaturen zwischen ca. 204°C und 400°C (400°F bis 750°F) eine Oxidschicht, die nicht auf dem Substrat haftet und daher abblättert. Das wirkt sich nachteilig auf die internen Heizwalzen aus, wenn die Wärmequelle (z.B. eine Quarzlampe) in Berührung mit den Kupferoxidflocken kommt. Das führt zu einer wesentlichen Minderung der Lampenleistung und der Lampenlebensdauer. Daher ist es wünschenswert, eine Kupferlegierung zu wählen, die eine stabile Oxidschicht aufweist, die nicht zum Abblättern neigt. Ein Beispiel einer derartigen Kupferlegierung ist C21000, also ein Kupfer mit 5% Zink. Ein weiterer Vorteil der Wahl einer Kupferlegierung mit einer stabilen Oxidschicht besteht darin, dass viele Elastomere, wie Siliconkautschuk, eine hervorragende Bindung mit der Oxidschicht eingehen, während derartige Elastomere mit nicht oxidiertem Kupfer keine gute Bindung eingehen.

Beim Anlaufen der Fixierwalze 10 würde daher das Kupferrohr 12 im Verhältnis zu dem Edelstahlabschlusszapfen 14 schnell auf Temperatur kommen. Die umschlossene Schwalbenschwanzschweißverbindung würde hohe (fehlerträchtige) Spannungen in der Verbindung vermeiden, wie sie bei Verwendung von Aluminium zu erwarten sind (aufgrund des viel höheren Wärmeausdehnungskoeffizienten im Vergleich zu dem angegebenen Edelstahl). Ähnlich wie bereits beschrieben, würde im Wesentlichen verhindert werden, dass sich das Rohr 12 von dem Abschlusszapfen 14 trennt. Zudem sei darauf hingewiesen, dass sich die Kupfer- und Edelstahlelemente mit anderen Schweißtechniken verbinden lassen, wie Lichtbogenschweißen, Schweißlöten oder Hartlöten. Ein weiterer Vorteil bei der Verwendung von Kupfer anstatt von Aluminium besteht darin, dass die mechanischen Eigenschaften (z.B. die Dauerdehngrenze) von Kupferlegierungen in dem Betriebsbereich zwischen ca. 204°C und 400°C (400°F bis 750°F) deutlich besser sind als die von Aluminiumlegierungen. Rohre aus Kupfer und Kupferlegierungen haben zudem eine höhere Wärmeleitfähigkeit als Aluminium, was die Gesamtleistung der Fixierwalze (und des Reproduktionsgeräts) wesentlich verbessert.

Obwohl die Erfindung mit besonderem Bezug auf bevorzugte Ausführungsbeispiele beschrieben wurde, ist die Erfindung nicht darauf beschränkt, sondern kann innerhalb ihres Geltungsbereichs Änderungen und Abwandlungen unterzogen werden.

### Liste der Bezugszeichen

- 10: Walze
- 12: Rohr
- 14: Abschlusszapfen
- 20: umschlossener Schwalbenschwanz
- 30: umschlossener Schwalbenschwanz
- 40: umschlossener Schwalbenschwanz

## Patentansprüche

1. Walze (10) insbesondere zur Verwendung in einer Fixiervorrichtung für ein Reproduktionsgerät, die für den Betrieb unter erhöhten Temperaturen im Bereich bis ca. 400°C ausgelegt ist, wobei die Walze (10) folgendes umfasst:
ein allgemein langgestrecktes, im Wesentlichen zylindrisches Rohr (12); und Abschlusszapfen (14) zum Abdichten der Enden des zylindrischen Rohres (12), wobei jeder Abschlusszapfen (14) jeweils einem Ende des zylindrischen Rohres (12) zugeordnet ist, so dass nach Ausbilden einer Schweißverbindung zwischen dem zylindrischen Rohr (12) und dem Abschlusszapfen (14) der Abschlusszapfen (14) eine Pressverbindung bildet.

2. Walze (10) nach Anspruch 1,
**dadurch gekennzeichnet,**
**dass** die jeweiligen Abschlusszapfen (14) mit dem zylindrischen Rohr (12) durch Bildung eines umschlossenen Schwalbenschwanzes verbunden sind.

3. Walze (10) nach Anspruch 2,
**dadurch gekennzeichnet,**
**dass** der umschlossene Schwalbenschwanz parallel zur Längsachse des Abschlusszapfens (14) verläuft.

4. Walze (10) nach Anspruch 2,
**dadurch gekennzeichnet,**
**dass** der umschlossene Schwalbenschwanz senkrecht zur Längsachse des Abschlusszapfens (14) verläuft.

5. Walze (10) nach einem der Ansprüche 2 bis 4,
**dadurch gekennzeichnet,**
**dass** der umschlossene Schwalbenschwanz ein doppelter Schwalbenschwanz ist.

6. Walze (10) nach einem der Ansprüche 1 bis 5,
**dadurch gekennzeichnet,**
**dass** das Rohr aus einem Material ausgebildet ist, dessen Wärmeausdehnungskoeffizient sich wesentlich von dem Wärmeausdehnungskoeffizienten des Abschlusszapfens (14) unterscheidet.

7. Walze (10) nach Anspruch 6,
**dadurch gekennzeichnet,**
**dass** der Wärmeausdehnungskoeffizient des Rohres (12) wesentlich größer als der Wärmeausdehnungskoeffizient des Abschlusszapfens (14) ist.

8. Walze (10) nach einem der Ansprüche 1 bis 7,
**dadurch gekennzeichnet,**
**dass** das Material für das Rohr (12) Aluminium oder eine Aluminiumlegierung ist, und
**dass** das Material für den Abschlusszapfen (14) Edelstahl ist.

9. Walze (10) nach einem der Ansprüche 1 bis 5,
**dadurch gekennzeichnet,**
**dass** der Wärmeausdehnungskoeffizient des Rohres (12) im Wesentlichen dem Wärmeausdehnungskoeffizienten des Abschlusszapfens (14) entspricht.

10. Walze (10) nach Anspruch 9,
**dadurch gekennzeichnet,**
**dass** das Material für das Rohr (12) Kupfer oder eine Kupferlegierung ist, und dass das Material für den Abschlusszapfen (14) Edelstahl ist.

11. Walze (10) nach Anspruch 9,
**dadurch gekennzeichnet,**
**dass** das Material für das Rohr (12) eine Kupferlegierung des Typs C21000 ist.
